(19)

Europäisches
Patentamt
European
Patent Office
Office européen
des brevets

(11)    **EP 3 128 419 A1**

(12)            **EUROPEAN PATENT APPLICATION**

(43) Date of publication:
   **08.02.2017   Bulletin 2017/06**

(51) Int Cl.:
   **G06F 9/445** *(2006.01)*

(21) Application number: **16165554.3**

(22) Date of filing: **15.04.2016**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD**

(30) Priority:   **04.08.2015   CN 201510471348**

(71) Applicant: **Xiaomi Inc.**
   **Beijing 100085 (CN)**

(72) Inventors:
   • **CHU, Yueyue**
     **100085 Beijing (CN)**
   • **LIN, Tao**
     **100085 Beijing (CN)**
   • **LU, Xiaochuang**
     **100085 Beijing (CN)**

(74) Representative: **Hughes, Andrea Michelle**
   **Dehns Germany LLP**
   **Singlspielerhaus**
   **Sendlinger Straße 29**
   **80331 München (DE)**

(54)    **METHOD AND APPARATUS FOR UNINSTALLING AN APPLICATION**

(57)    Method and apparatus for uninstalling application are provided in the disclosure, which belongs to the technical field of mobile terminal. The method may comprise: receiving an uninstall instruction for the application (S11); uninstalling the application according to the uninstall instruction (S12); and removing an icon of the application from a desktop of a mobile terminal, while animating a process of removing the icon of the application from the desktop of the terminal (S13). By animating the process of the icon of the application being removed from the desktop of the terminal, a user may be provided with an improved feedback on the uninstall of the application and allowed to learn that the application has already been uninstalled, resulting in good user experience.

```
┌─────────────────────────────────────┐
│   receive uninstall instruction     │── S11
└─────────────────────────────────────┘
                  │
                  ▼
┌─────────────────────────────────────┐
│        uninstall application        │── S12
└─────────────────────────────────────┘
                  │
                  ▼
┌─────────────────────────────────────┐
│ remove icon of application while    │── S13
│  animating the process of removing  │
└─────────────────────────────────────┘
```

FIG. 2

**Description**

This application and claims priority to Chinese Patent Application No. 201510471348.3, filed August 4, 2015.

**FIELD**

The present disclosure generally relates to mobile terminals, and more particularly to method and apparatus for uninstalling an application.

**BACKGROUND**

With the explosive development of the processing capability and storage capacity of mobile terminals, a flood of applications has been spread and used rapidly. After an application is installed on a mobile terminal, a user may need to uninstall the application for a variety of reasons, for example, the need to free up storage space, incorrect installation of the application and the like.

In related art, when a user needs to uninstall an application, the user enters an uninstall instruction for the application into the mobile terminal; the mobile terminal uninstalls the application according to the received uninstall instruction, and the icon of the application disappears from the desktop of the mobile terminal accordingly.

The user will not get any feedback about the application's uninstall from the mobile terminal except for the disappearance of the icon, resulting in poor user experience.

**SUMMARY**

In view of the fact in related arts that lack of feedback about the uninstall of an application results in poor user experience, a method and apparatus for uninstalling an application are provided in the disclosure.

According to a first aspect of the present disclosure, a method for uninstalling an application is provided, including: receiving an uninstall instruction for the application; uninstalling the application according to the uninstall instruction; and removing an icon of the application from a desktop of a mobile terminal while animating a process of removing the icon of the application from the desktop of the terminal.

In a potential implementation of the first aspect, the removing the icon of the application from the desktop of the mobile terminal while animating the process of removing the icon of the application from the desktop of the terminal may include animating in a particle manner the process of removing the icon of the application from the desktop of the mobile terminal.

Alternatively, the animating in the particle manner may include: creating a plurality of particles that start to move from where the icon of the application is located; dividing the icon of the application into multiple parts, the number of which is equal to the number of the particles, with the color of each of the parts taken as the color of the corresponding particle; and controlling the particles to move along respective trajectories until the particles disappear.

In an exemplary embodiment, the trajectories of the plurality of particles may have the same shape, different directions and different amplitudes.

In an exemplary embodiment, the shape of the trajectories may be any one of Bezier curve, parabola and straight line.

In an exemplary embodiment, the directions and amplitudes of the trajectories of the plurality of particles may be random.

In an exemplary embodiment, the controlling may include controlling the particles to move along the respective trajectories after being delayed by different time periods respectively.

In an exemplary embodiment, the controlling may include controlling the particles to each have a gradually reduced transparency during the particles' moving along the respective trajectories.

In an exemplary embodiment, the particles may have random sizes.

In another potential implementation of the first aspect, the animating in the particle manner may include: reducing the size of the icon of the application; and animating in the particle manner the process of the icon of the application being removed from the desktop of the mobile terminal when the icon of the application is reduced to a set size.

In another potential implementation of the first aspect, the method may further include: receiving a processing instruction for the application; and displaying the icon of the application in a dynamic way according to the processing instruction, wherein the icon of the application is provided with an input interface for the uninstall instruction.

According to a second aspect of embodiments of the present disclosure, a device for uninstalling an application is provided, including: a receive module to receive an uninstall instruction for the application; an uninstall module to uninstall the application according to the uninstall instruction; and a remove module to remove an icon of the application from a desktop of a mobile terminal while animating a process of the icon of the application being removed from the desktop of the mobile terminal.

In a potential implementation of the second aspect, the remove module may be configured to animate in a particle manner the process of removing the icon of the application from the desktop of the mobile terminal.

In an exemplary embodiment, the remove module may include: a creating sub-module to create a plurality of particles moving from where the icon of the application is located; a dividing sub-module to divide the icon of the application into multiple parts, the number of which is equal to the number of the particles, with the color of each of the parts taken as the color of the corresponding particle; and a controlling sub-module to control the particles to move along respective trajectories until the particles disappear.

In an exemplary embodiment, the trajectories of the plurality of particles may have the same shape, different directions and different amplitudes.

In an exemplary embodiment, the shape of the trajectories may be any one of Bezier curve, parabola and straight line.

In an exemplary embodiment, the directions and amplitudes of the trajectories of the plurality of particles may be random.

In an exemplary embodiment, the controlling sub-module may be configured to control the particles to move along the respective trajectories after being delayed by different time periods respectively.

In an exemplary embodiment, the controlling sub-module may be configured to control the particles to each have a gradually reduced transparency during the particles' moving along the respective trajectories.

In an exemplary embodiment, the particles may have random sizes.

In another implementation of the second aspect, the remove module may be configured to: reduce the size of the icon of the application; and animate in the particle manner the process of the icon of the application being removed from the desktop of the mobile terminal when the icon of the application is reduced to a set size.

In another implementation of the second aspect, the receive module may be configured to: receive a processing instruction for the application, and the device may further include a displaying module to display the icon of the application in a dynamic way according to the processing instruction, wherein the icon of the application is provisioned with an input interface for the uninstall instruction.

According to a third aspect of embodiments of the present disclosure, an apparatus for uninstalling an application is provided, including: a processor and a memory for storing processor-executable instructions, wherein the processor is configured to: receive an uninstall instruction for the application; uninstall the application according to the uninstall instruction; and remove an icon of the application from a desktop of a mobile terminal, while animating a process of removing the icon of the application from the desktop of the terminal.

Embodiments of the disclosure may provide at least some of the following beneficial effects: by animating the removing of the icon of the application from the desktop of the terminal, a user may be provided with an improved feedback on the uninstall of the application and allowed to learn that the application has already been uninstalled, thus resulting in good user experience.

It is to be understood that both the forgoing general description and the following detailed description are exemplary only, and are not restrictive of the present disclosure.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Figs. 1A-1C are scenario diagrams showing a method for uninstalling an application according to an exemplary embodiment.

Fig. 2 is a flow diagram illustrating a method for uninstalling an application according to an exemplary embodiment.

Fig. 3 is a flow diagram illustrating a method for uninstalling an application according to an exemplary embodiment.

Fig. 4 is a block diagram illustrating a device for uninstalling an application according to an exemplary embodiment.

Fig. 5 is a block diagram illustrating a device for uninstalling an application according to another exemplary embodiment.

Fig. 6 is a block diagram illustrating a device for uninstalling an application according to an exemplary embodiment.

## DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

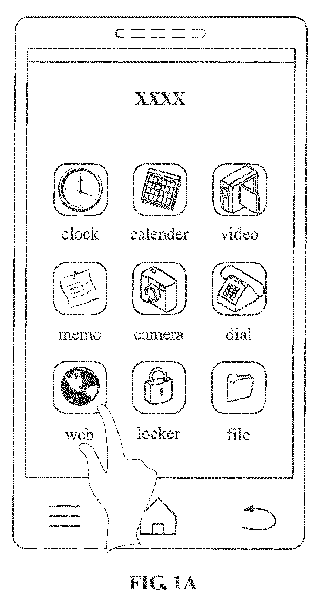

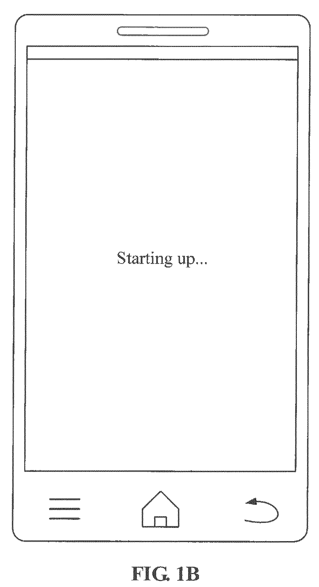

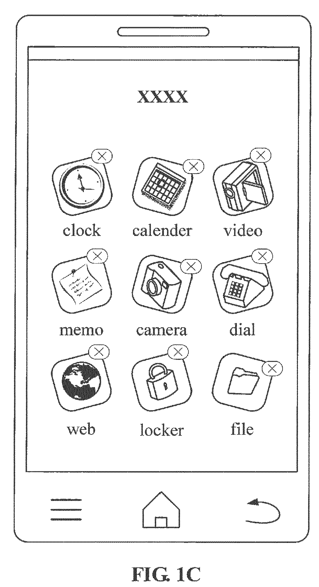

A brief description of the scenarios in which a method for uninstalling an application may be applied is provided below. As illustrated in Fig. 1A, a plurality of icons are provided on a desktop of a mobile terminal, each corresponding to one application. If a user selects an icon for a period less than a set period (e.g. 1s) (i.e. the icon is clicked), the application corresponding to the icon on the mobile terminal will be opened for use, as illustrated in Fig. 1B. If, however, the user selects the icon for a period not less than the set period (i.e. the icon is long-pressed), the application corresponding to the icon on the mobile terminal will not be opened; instead, all the icons will be displayed in a dynamic way, and each icon is provided with an input interface for an instruction of uninstalling the corresponding application (i.e. the symbol "x" on the top right corner of the icon in Fig. 1C). The user may change, by dragging an icon, a location where the icon is displayed, and may uninstall an application corresponding to an icon by clicking the symbol "x" on the top right corner of the icon.

It should be noted that the above application scenario is only exemplary, and the present disclosure is not limited thereto.

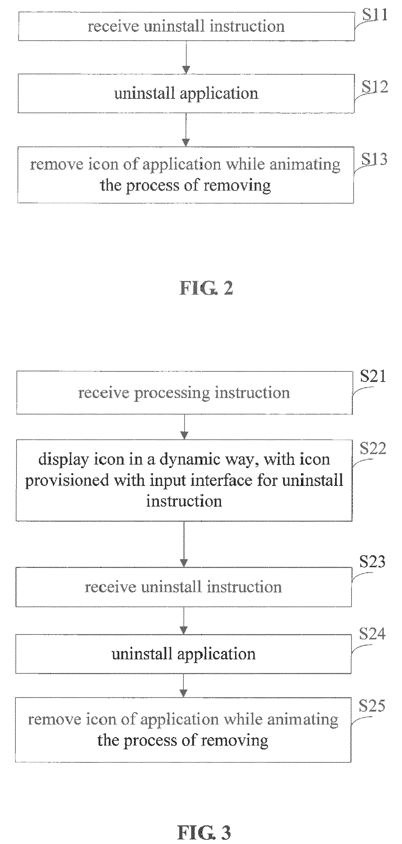

Fig. 2 is a flow diagram illustrating a method for uninstalling an application according to an exemplary embodiment. As illustrated in Fig. 2, the method for uninstalling the application is used in a terminal, and may include the following steps.

In step S11, an uninstall instruction for an application is received.

In step S12, the application is uninstalled according to the uninstall instruction.

In step S13, the icon of the application is removed from the desktop of the mobile terminal, and the process of removing the icon of the application from the desktop of the terminal is animated.

In the embodiment of the disclosure, by animating the process of the icon of the application being removed from the desktop of the terminal, the user may be provided with an improved feedback on the uninstall of the application, and allowed to learn that the application has already been uninstalled, thus good user experience can be obtained.

Fig. 3 is a flow diagram illustrating a method for uninstalling an application according to another exemplary embodiment. As illustrated in Fig. 3, the method for uninstalling the application is used in a terminal, and includes the following steps.

In step S21, a processing instruction for an application is received.

In the embodiment, the processing instruction is generated upon the icon of the application having been selected by the user for a set time. The icon of the application is displayed on the desktop of the mobile terminal.

In practice, as illustrated in Fig. 1A, a plurality of icons may be provided on the desktop of the mobile terminal, each corresponding to one application. The user touches a region on the touch screen corresponding to the icon, and the touch screen generates a corresponding touch signal. The mobile terminal determines that a processing instruction for the application has been received if the duration of the touch signal reaches a set time. The processing may be change of the location of the icon or removal of the icon and its corresponding application.

In step S22, the icons of the applications are displayed in a dynamic way according to the uninstall instruction, and the icons of the applications are provisioned with an input interface for an uninstall instruction.

Alternatively, the dynamic way may be to keep the center of the icon of an application still and wiggle the icon of the application; the icon of the application may be wiggled in a set range of angles, for example, -30°~30°.

The input interface for the uninstall instruction may be denoted by a symbol "x", as illustrated in Fig. 1C.

In step S23, the uninstall instruction for the application is received.

As illustrated in Fig. 1C, when the user touches a region on the touch screen corresponding to the input interface for the uninstall instruction, the touch screen generates a corresponding touch signal, and the mobile terminal determines that the uninstall instruction for the application has been received.

In step S24, the application is uninstalled according to the uninstall instruction.

In practice, the mobile terminal deletes the application from a memory according to the uninstall instruction.

In step S25, the icon of the application is removed from the desktop of the mobile terminal, and the process of removing the icon of the application from the desktop of the terminal is animated.

In an embodiment, the removing may include controlling the icon of the application to have a gradually reduced transparency during removing the icon of the application from the desktop of the terminal.

In one implementation of the embodiment, step S25 may include animating, in a particle manner, the process of removing the icon of the application from the desktop of the mobile terminal.

It is to be understood that the process of gradually reducing the transparency of the icon of the application may be combined with the animating process in the particle manner to show the user the process of removing the icon of the application from the desktop of the mobile terminal in a particle animation manner, for improved visual perception of the user.

Alternatively, the animating in the particle manner may include: creating a plurality of particles that start to move from where the icon of the application is located; dividing the icon of the application into multiple parts, the number of which is equal to the number of the particles, with the color of each of the parts taken as the color of the corresponding particle; and moving the particles along respective trajectories until the particles disappear.

In a specific implementation, the particle disappears when its transparency becomes 0.

In particular, the dividing may include: dividing the icon of the application into a matrix of n rows and m columns, each element of the matrix being one of the parts, where m≥1 and m is an integer, n≥1 and n is an integer; mapping the parts to the respective particles in a one-to-one manner; and setting the particles to each have the color of the corresponding part.

In an exemplary embodiment, m=n. An icon of an application is generally square; dividing the icon of the application into a matrix that has the same number of rows and columns may enable the color of the icon of the application to be distributed evenly on the particles, and thus produce a better visualization effect of the particle animation.

For example, the number of the particles may be 100 and the icon of the application may be divided into a matrix of 10 rows and 10 columns.

In an exemplary embodiment, the particles may have random sizes. A particle may have generally a size of 5-40 pixels, and a few particles (e.g. less than 20% of the total amount) may be more than 40 pixels, to further improve the visualization effect of the particle animation.

In an exemplary embodiment, the trajectories of the plurality of particles may have the same shape, and have different directions and different amplitudes. The particle animation is thus allowed to have both a certain degree of regularity and at the same time a certain degree of variation, and thus a good display effect may be achieved.

In an exemplary embodiment, the trajectories of the plurality of particles may be either a curve (for example, Bezier curve or parabola) or a straight line.

In an exemplary embodiment, the directions and amplitudes of the trajectories of the plurality of particles may be random.

In practice, when a particle is created, the trajectory of the particle may be configured by defining the coordinates of particular points that the particle passes by. Taking the Bezier curve as an example, the trajectory of a particle may be configured by defining the coordinates of the start point, the end point, and an intermediate point.

Taking the top left corner of the display as the origin, the upper border as the x-axis, and the left border as the y-axis, the start point, the end point, and the intermediate point of each particle may be defined as below.

The coordinate of the start point (obj.sx, obj.sy) is calculated according to equations (1)-(2):

$$obj.sx=centerX+a*2*(math.random()-0.5); \qquad (1)$$

$$obj.sy=centerY+a*2*(math.random()-0.5); \qquad (2)$$

where (centerX, centerY) is the coordinate of the center of the icon; a is a set value and is typically half a side-length (e.g. 57 pixels), for example, 30 pixels; math.random() is a random number generating function, and the range of the random number generated is [0, 1]. The coordinate of the end point (obj.ex, obj.ey) is calculated according to equations (3)-(5):

$$offset=range*2*(math.random()-0.5)*((math.random()>b)?c: d); \qquad (3)$$

$$obj.ex=centerX+offset; \qquad (4)$$

$$obj.ey=centerY+((math.random()>0.5)?(-(range-math.abs(offset))*e+(0.5-math.random())*2*f-((math.random()>h)?0:f*math.random())):((range-math.abs(offset))*(1-e)+(0.5-math.random())*2*g+((math.random()>i)?0:g*math.random()))); \qquad (5)$$

where offset is the variation range of the end point; range is a set value and is typically half the width of the screen (e.g. 640 pixels), for example, 350 pixels; math.random() is the random number generating function, and the range of the random number generated is [0, 1]; (centerX, centerY) is the coordinate of the center of the icon; math.abs() is a function for obtaining an absolute value of a rounded value.

b, c, d are set values that may be used to define the horizontal amplitude of the trajectory of the particle. As a better visualization effect will be produced if most of the particles have a small trajectory amplitude and only a few of the particles have a large trajectory amplitude, the ranges of the values b, c, and d may be defined respectively as $0<b<0.5$, $0<c<1$, $d>1$, for example, b=0.1, c=0.8 and d=1.3.

In practice, the movement of a nearer particle (the horizontal trajectory amplitude is small) is more obvious (the vertical trajectory amplitude is large), therefore range-math.abs(offset) is added into the calculation of obj.ey, in order to achieve the effect that a particle having a smaller horizontal trajectory amplitude will have a larger vertical trajectory amplitude, and thus improve the rendering of the particle animation.

e, f, g are set values. In view of the fact that there is gravity in real world, the trajectory amplitude of a particle that moves upward is smaller than the trajectory amplitude of a particle that moves downward. The ranges of the values e, f, and g may be defined as $0<e<0.5$, f being 1/4-1/3 of the screen width, and g being 1/2-2/3 of the screen width, for example, e=0.4, f=80 and g=200., which enables the effect of the particle animation to better approximate a reality scene.

The equation for calculating obj.ey involves ((math.random()>h)?0:f*math.random()) or ((math.random()>i)?0:g*random()); as a consequence the trajectory amplitude of some particles may be increased by f*math.random() or g*random(), and the overall effect will be a heart-shaped or peach-shaped sharp corner, thereby the appearance of the pattern displayed by the particle animation will be increased. Specifically, h and i are set values, the ranges of the values h and i may be defined as $0<h\leq0.2$, $0<i\leq0.2$, for example, h=0.2, i=0.1.

The coordinate of an intermediate point (obj.ex, obj.ey) is calculated according to equations (6)-(7):

$$\text{obj.tx}=\text{centerX}+(\text{obj.ex}-\text{centerX})/2; \qquad (6)$$

$$\text{obj.ty}=\text{obj.ey}>\text{centerY}?(\text{centerY}-(\text{obj.ey}-j)/2-k):((\text{obj.ey}+\text{centerY})/4)-p-\text{math.abs(offset)})$$

$$*q*\text{math.random}(); \qquad (7)$$

where (centerX, centerY) is the coordinate of the center of the icon; math.abs() is a function for obtaining an absolute value of a rounded value; (obj.ex, obj.ey) is the coordinate of the end point; math.random() is the random number generating function, and the range of the random number generated is [0, 1]. The intermediate point will be located in the upper half of the screen ((centerY-(obj.ey-j)/2-k)<centerY) when the end point is in the bottom half of the screen (obj.ey>centerY), rendering a scene that the particle rises first and then falls. The intermediate point will be located around the center of the screen (((obj.ey+centerY)/4)-p-math.abs(offset))*q*math.random()) when the end point is in the upper half of the screen (obj.ey<centerY), rendering a scene that the particle changes slowly first and then rises rapidly. j, k, p, q are set values; j is generally 1/4 of the screen height (e.g. 960 pixels), for example, 260 pixels; k is generally 1/8 of the screen height, for example, 100 pixels; p is generally 1/3 of the screen height, for example, 300 pixels; $0<q<0.5$, for example, q=0.3.

It should be noted that X?Y:Z in the above equations means that Y is selected to perform calculation when X is satisfied and Z is selected to perform calculation when X is not satisfied.

In an exemplary embodiment, moving the particles along respective trajectories may include: the particles beginning to move along the respective trajectories after being delayed by different time periods respectively.

In implementations, the time periods delayed for the particles may be partly the same and partly different, or may be totally different from each other.

In an exemplary embodiment, the time periods delayed for the particles may be random.

For example, the time periods delayed for the particles may be 0.2*math.random(), that is to say, the particles will be emitted randomly within 200ms.

In an exemplary embodiment, moving the particles along the respective trajectories may include that the particles accelerate along the respective trajectories.

It will be appreciated that the particles accelerating along the respective trajectories may present on the desktop of the mobile terminal a picture of dispersing, which imitates a scene of particle explosion more vividly and improves the rendering effect.

In an exemplary embodiment, moving the particles along the respective trajectories may include: the particles each have a gradually reduced transparency during the particles' moving along the respective trajectories, thereby rendering an explosion scene of particles from being generated to disappearing.

In a specific embodiment, the particles may have an initial transparency of 100% and a final transparency of 0.

Alternatively, animating in the particle manner the process of the icon of the application being removed from the desktop of the mobile terminal may include: reducing the icon of the application in size; and animating in the particle manner the process of the icon of the application being removed from the desktop of the mobile terminal when the icon of the application is reduced to a set size.

In an exemplary embodiment, reducing the icon of the application may include reducing the icon of the application in a set speed until the icon of the application is reduced to a set size, for example, 10 pixels* 10 pixels.

In the embodiment of the disclosure, the process of the icon of the application being removed from the desktop of the mobile terminal is animated, the user may be provided with an improved feedback on the uninstall of the application and allowed to know that an application has already been removed; good user experience can thus be obtained.

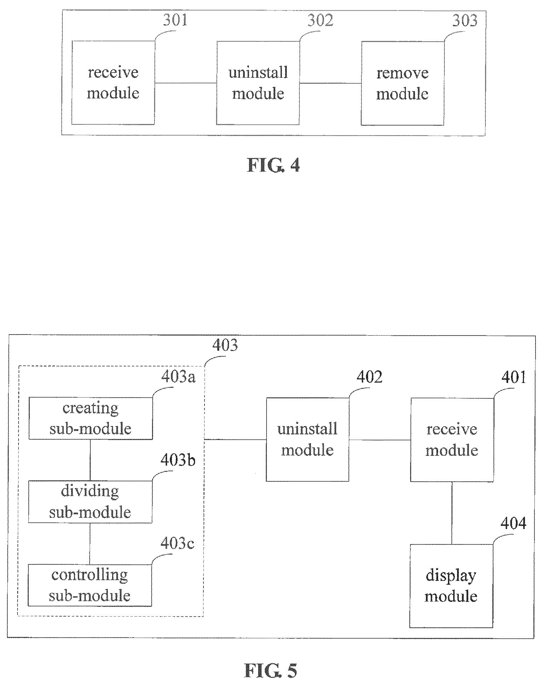

Fig. 4 is a block diagram illustrating a device for uninstalling an application according to an exemplary embodiment. As illustrated in Fig. 4, the device may include a receive module 301, an uninstall module 302 and a remove module 303.

The receive module 301 is configured to receive an uninstall instruction for the application.

The uninstall module 302 is configured to uninstall the application according to the uninstall instruction.

The remove module 303 is configured to remove an icon of the application from a desktop of a mobile terminal, while animating a process of the icon of the application being removed from the desktop of the mobile terminal.

In the embodiment of the disclosure, the process of the icon of the application being removed from the desktop of the mobile terminal is animated; the user may be provided with an improved feedback on the uninstall of the application and allowed to know that an application has already been removed; good user experience can thus be obtained.

Fig. 5 is a block diagram illustrating a device for uninstalling application according to another exemplary embodiment. As illustrated in Fig. 5, the device may include a receive module 401, an uninstall module 402 and a remove module 403.

The receive module 401 is configured to receive an uninstall instruction for the application.

The uninstall module 402 is configured to uninstall application according to the uninstall instruction.

The remove module 403 is configured to remove an icon of the application from a desktop of a mobile terminal, while animating a process of the icon of the application being removed from the desktop of the mobile terminal.

In an implementation of the embodiment, the remove module 403 may be configured to animate in a particle manner the process of the icon of the application being removed from the desktop of the mobile terminal.

Alternatively, the remove module 403 may include a creating sub-module 403a, a dividing sub-module 403b and a controlling sub-module 403c.

The creating sub-module 403a is configured to create a plurality of particles moving from where the icon of the application is located.

The dividing sub-module 403b is configured to divide the icon of the application into multiple parts, the number of which is equal to the number of the particles, with the color of each of the parts taken as the color of the corresponding particle.

The controlling sub-module 403c is configured to control the particles to move along respective trajectories until the particles disappear.

In an exemplary embodiment, the trajectories of the plurality of particles may have the same shape, different directions and different amplitudes.

In an exemplary embodiment, the shape of the trajectories may be any one of Bezier curve, parabola and straight line.

In an exemplary embodiment, the directions and amplitudes of the trajectories of the plurality of particles may be random.

In an exemplary embodiment, the controlling sub-module 403c may be configured to control the particles to move along respective trajectories after being delayed by different time periods respectively.

In an exemplary embodiment, the controlling sub-module 403c may be configured to control the particles to each have a gradually reduced transparency during the particles' moving along the respective trajectories.

In an exemplary embodiment, the particles may have random sizes.

In another implementation of the embodiment, the remove module 403 may be configured to reduce the icon of the application, and to animate in the particle manner the process of the icon of the application being removed from the desktop of the mobile terminal when the icon of the application is reduced to a set size.

In another implementation of the embodiment, the receive module 401 may also be configured to receive a processing instruction for an application.

The device may further include a display module 404. The display module 404 is configured to display the icon of the application in a dynamic way according to the processing instruction, wherein each icon of the application is provided with an input interface for the uninstall instruction.

In the embodiment of the disclosure, the process of the icon of the application being removed from the desktop of the mobile terminal is animated; the user may be provided with an improved feedback on the uninstall of the application and allowed to know that an application has already been removed; good user experience can thus be obtained.

With respect to the devices in the above embodiments, the specific manners that the respective modules perform operations have been described in detail in the embodiments regarding the relevant methods, and will not be elaborated herein.

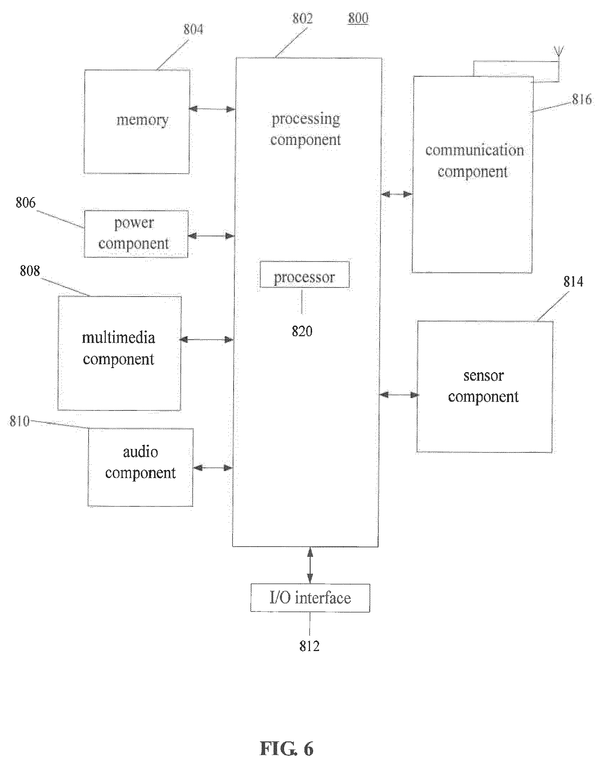

Fig. 6 is a block diagram of an apparatus 800 for uninstalling an application according to an exemplary embodiment. For example, the apparatus 800 may be a mobile phone, a computer, a digital broadcast terminal, a messaging device, a gaming console, a tablet, a medical device, exercise equipment, a personal digital assistant, and the like.

Referring to Fig. 6, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc.

The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power for the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel.

The touch sensors may not only sense a boundary of a touch or swipe action, but also sense a period of time and a pressure associated with the touch or swipe action. In some embodiments, the multimedia component 808 includes a front camera and/or a rear camera.

The front camera and the rear camera may receive an external multimedia datum while the apparatus 800 is in an operation mode, such as a photographing mode or a video mode. Each of the front camera and the rear camera may be a fixed optical lens system or have optical focusing and zooming capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface modules being, for example, a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components (e.g., the display and the keypad, of the apparatus 800), a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by a processor of a mobile terminal, cause the mobile terminal to perform a method for uninstalling an application, including a processor and a memory for storing processor-executable instructions, wherein the processor is configured to: receive an uninstall instruction for application; uninstall the application according to the uninstall instruction; and remove an icon of the application from a desktop of the mobile terminal while animating the process of removing the icon of the application from the desktop of the mobile terminal.

In one implementation of the embodiment, removing the icon of the application from the desktop of the mobile terminal while animating the process of removing the icon of the application from the desktop of the mobile terminal may include animating, in a particle manner, the process of removing the icon of the application from the desktop of the mobile terminal.

In an exemplary embodiment, animating in the particle manner the process of removing the icon of the application from the desktop of the mobile terminal may include: creating a plurality of particles that start to move from where the icon of the application is located; dividing the icon of the application into multiple parts, the number of which is equal to the number of the particles, with the color of each of the parts taken as the color of the corresponding particle; and controlling the particles to move along respective trajectories until the particles disappear.

In an exemplary embodiment, the trajectories of the plurality of particles may have the same shape, different directions and different amplitudes.

In an exemplary embodiment, the shape of the trajectories may be any one of Bezier curve, parabola and straight line.

In an exemplary embodiment, the directions and amplitudes of the trajectories of the plurality of particles may be random.

In an exemplary embodiment, controlling the particles to move along the respective trajectories may include controlling the particles to move along the respective trajectories after being delayed by different time periods respectively.

Alternatively, controlling the particles to move along the respective trajectories may include controlling the particles to each have a gradually reduced transparency during the particles' moving along the respective trajectories.

Alternatively, the particles may have random sizes.

In another implementation of the embodiment, animating in the particle manner the process of removing the icon of the application from the desktop of the mobile terminal may include: reducing the icon of the application; and animating in the particle manner the process of the icon of the application being removed from the desktop of the mobile terminal when the icon of the application is reduced to a set size.

In another implementation of the embodiment, the method may further include: receiving a processing instruction for the application; and displaying the icon of the application in a dynamic way according to the processing instruction, wherein the icon of the application is provided with an input interface for the uninstall instruction.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

**Claims**

1. A method for uninstalling an application, **characterized in** comprising:

receiving (S11) an uninstall instruction for the application;
uninstalling (S12) the application according to the uninstall instruction; and
removing (S 13) an icon of the application from a desktop of a mobile terminal, while animating a process of removing the icon of the application from the desktop of the terminal.

2. The method of claim 1, wherein the removing the icon of the application from the desktop of the mobile terminal while animating the process of removing the icon of the application from the desktop of the terminal comprises:

    animating in a particle manner the process of removing the icon of the application from the desktop of the mobile terminal.

3. The method of claim 2, wherein the animating in the particle manner comprises:

    creating a plurality of particles that start to move from where the icon of the application is located;
    dividing the icon of the application into multiple parts, the number of which is equal to the number of the particles, with the color of each of the parts taken as the color of the corresponding particle; and
    controlling the particles to move along respective trajectories until the particles disappear.

4. The method of claim 3, wherein the trajectories of the plurality of particles have the same shape, different directions and different amplitudes.

5. The method of claim 4, wherein the shape of the trajectories is one of Bezier curve, parabola and straight line.

6. The method of claim 4, wherein the directions and amplitudes of the trajectories of the plurality of particles are random.

7. The method of claim 3, wherein the controlling comprises:

    controlling the particles to move along the respective trajectories after being delayed by different time periods respectively.

8. The method of claim 3, wherein the controlling comprises:

    controlling the particles to each have a gradually reduced transparency during the particles' moving along the respective trajectories.

9. The method of claim 3, wherein the particles have random sizes.

10. The method of any one of claims 1-9, wherein the animating in a particle manner comprises:

    reducing the icon of the application; and
    animating in the particle manner the process of the icon of the application being removed from the desktop of the mobile terminal when the icon of the application is reduced to a set size.

11. The method of any one of claims 1-9, further comprising:

    receiving (S21) a processing instruction for the application; and
    displaying (S22) the icon of the application in a dynamic way according to the processing instruction, wherein the icon of the application is provided with an input interface for the uninstall instruction.

12. A device for uninstalling an application, comprising:

    a receive module (301) configured to receive an uninstall instruction for the application;
    an uninstall module (302) configured to uninstall the application according to the uninstall instruction; and
    **characterised by**
    a remove module (303) configured to remove an icon of the application from a desktop of a mobile terminal, while animating a process of the icon of the application being removed from the desktop of the mobile terminal.

13. An apparatus for uninstalling an application, **characterized in** comprising:

a processor (820);
a memory (804) for storing processor-executable instructions;
wherein the instructions, when executed by the processor, causes the processor to:

   receive an uninstall instruction for the application;
   uninstall the application according to the uninstall instruction; and
   remove an icon of the application from a desktop of a mobile terminal, while animating a process of removing the icon of the application from the desktop of the terminal.

14. A computer program including instructions for executing the steps of a method for uninstalling an application according to any one of claims 1 to 11 when said program is executed by a computer.

15. A non-transitory computer-readable storage medium having stored therein a computer program including instructions for executing the steps of a method for uninstalling an application according to any one of claims 1 to 11.

**FIG. 1A**

Starting up...

**FIG. 1B**

**FIG. 1C**

```
┌─────────────────────────────────────────┐  S11
│        receive uninstall instruction     │
└─────────────────────────────────────────┘
                    │
                    ▼
┌─────────────────────────────────────────┐  S12
│            uninstall application         │
└─────────────────────────────────────────┘
                    │
                    ▼
┌─────────────────────────────────────────┐  S13
│  remove icon of application while animating │
│          the process of removing         │
└─────────────────────────────────────────┘
```

FIG. 2

```
┌─────────────────────────────────────────┐  S21
│        receive processing instruction    │
└─────────────────────────────────────────┘
                    │
                    ▼
┌─────────────────────────────────────────┐  S22
│     display icon in a dynamic way, with icon │
│    provisioned with input interface for uninstall │
│                 instruction              │
└─────────────────────────────────────────┘
                    │
                    ▼
┌─────────────────────────────────────────┐  S23
│        receive uninstall instruction     │
└─────────────────────────────────────────┘
                    │
                    ▼
┌─────────────────────────────────────────┐  S24
│            uninstall application         │
└─────────────────────────────────────────┘
                    │
                    ▼
┌─────────────────────────────────────────┐  S25
│  remove icon of application while animating │
│          the process of removing         │
└─────────────────────────────────────────┘
```

FIG. 3

| | | |
|---|---|---|
| 301 | 302 | 303 |
| receive module | uninstall module | remove module |

**FIG. 4**

| 403 | | | |
|---|---|---|---|
| 403a | | 402 | 401 |
| creating sub-module | | uninstall module | receive module |
| 403b | | | |
| dividing sub-module | | | 404 |
| 403c | | | display module |
| controlling sub-module | | | |

**FIG. 5**

16

FIG. 6

Europäisches
Patentamt

European
Patent Office

Office européen
des brevets

# EUROPEAN SEARCH REPORT

Application Number

EP 16 16 5554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2013/247021 A1 (YOU QIANG [CN])<br>19 September 2013 (2013-09-19)<br>* paragraphs [0014], [0018] - [0020];<br>figures 3,4 * | 1-10,<br>12-15<br>11 | INV.<br>G06F9/445 |
| Y | US 2013/050109 A1 (BAN JI-HYE [KR])<br>28 February 2013 (2013-02-28)<br>* paragraph [0011] *<br>* paragraph [0091] - paragraph [0092];<br>figures 4B,4C * | 11 | |
| A | US 2014/258901 A1 (CHO XAE-MIN [KR])<br>11 September 2014 (2014-09-11)<br>* paragraph [0006]; claims 1,6 *<br>* paragraph [0104] - paragraph [0107];<br>figures 11A-11C *<br>* paragraph [0111]; figure 12C * | 1,2,10,<br>12-15 | |
| A | US 2015/033160 A1 (XIE LIN [CN] ET AL)<br>29 January 2015 (2015-01-29)<br>* paragraph [0101] - paragraph [0103];<br>figures 9A-9C * | 1,12-15 | TECHNICAL FIELDS<br>SEARCHED (IPC)<br><br>G06F |

The present search report has been drawn up for all claims

| Place of search | Date of completion of the search | Examiner |
|---|---|---|
| Munich | 30 November 2016 | de Junca, Irène |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 16 5554

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2016

| Patent document cited in search report | | Publication date | Patent family member(s) | | Publication date |
|---|---|---|---|---|---|
| US 2013247021 | A1 | 19-09-2013 | CN | 103309692 A | 18-09-2013 |
| | | | TW | 201337710 A | 16-09-2013 |
| | | | US | 2013247021 A1 | 19-09-2013 |
| US 2013050109 | A1 | 28-02-2013 | CN | 103076942 A | 01-05-2013 |
| | | | EP | 2565769 A2 | 06-03-2013 |
| | | | KR | 20130023954 A | 08-03-2013 |
| | | | US | 2013050109 A1 | 28-02-2013 |
| US 2014258901 | A1 | 11-09-2014 | AU | 2014230369 A1 | 13-08-2015 |
| | | | CN | 105190514 A | 23-12-2015 |
| | | | EP | 2972733 A1 | 20-01-2016 |
| | | | KR | 20140111497 A | 19-09-2014 |
| | | | US | 2014258901 A1 | 11-09-2014 |
| | | | WO | 2014142503 A1 | 18-09-2014 |
| US 2015033160 | A1 | 29-01-2015 | CN | 103399688 A | 20-11-2013 |
| | | | EP | 3005058 A1 | 13-04-2016 |
| | | | KR | 20150034828 A | 06-04-2015 |
| | | | US | 2015033160 A1 | 29-01-2015 |
| | | | WO | 2015012595 A1 | 29-01-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510471348